# EUROPEAN PATENT SPECIFICATION

(11) **EP 3 663 680 B1**
(45) Date of publication and mention of the grant of the patent: **24.01.2024**
(21) Application number: 18209931.7
(22) Date of filing: 03.12.2018
(51) Int. Cl.: F25B 39/04, F25B 40/02, F25B 41/00, B60H 1/00, B60H 1/32, F28D 1/04, F28D 9/00, F25B 1/10, F25B 41/345

(54) **HEAT EXCHANGE ASSEMBLY FOR THE CONDENSATION AND THE UNDERCOOLING OF A COOLANT**
WÄRMEAUSTAUSCHANORDNUNG ZUR KONDENSATION UND UNTERKÜHLUNG EINES KÜHLMITTELS
ENSEMBLE D'ÉCHANGE DE CHALEUR POUR LA CONDENSATION ET LE SOUS-REFROIDISSEMENT D'UN RÉFRIGÉRANT

(43) Date of publication of application: 10.06.2020
(73) Proprietor: Stellantis Europe S.p.A., 10135 Torino, (TO) (IT)
(72) Inventor: CRIVELLARI, Attilio, 10135 Torino (IT); FERRARIS, Walter, 10135 Torino (IT); LOVUOLO, Francesco, 10135 Torino (IT); DI TULLIO, Emiliano, 10135 Torino (IT); DI SCIULLO, Fausto, 10135 Torino (IT)
(74) Representative: Studio Torta S.p.A.

(56) References cited:
- DE-A1- 10 060 114
- KR-A- 20120 095 502
- US-A1- 2018 139 870
- US-B1- 6 167 722

## Description

The invention relates to a heat exchange assembly for the condensation and the undercooling of a coolant. In particular, the description hereinafter will refer to a cooling circuit for a vehicle conditioning system, without lacking generality because of this.

As it is known, the cooling is obtained by a refrigeration cycle, namely by a circuit in which a coolant, in the form of compressed gas, flows in a condenser in order to get to the liquid phase, then it is subject to an expansion, which reduces pressure and temperature, and subsequently it gets into an evaporator so as to exchange heat with a transfer fluid (for example the air for conditioning the passenger compartment). Finally, the coolant - from the evaporator - goes back to the compressor, in the gaseous state, in order to repeat the cycle.

In conditioning systems, the condenser generally is an air condenser, i.e. it is defined by a radiator which, when a flow of external air flows through it, cools the coolant flowing in a series of channels of the radiator itself.

Alternatively, the condenser can be a water condenser, i.e. it can be defined by a heat exchanger where the coolant and a liquid, usually water, flow (typically in counter-flow): this liquid circulates in a loop and, at the outlet of the condenser, is cooled down in a radiator by external air so that it can then cool down, in turn, the coolant in the condenser.

In some solutions, the coolant at the outlet of the condenser, in the form of liquid, is undercooled in a further heat exchanger, so as to increase the thermal difference available in the evaporator, thus increasing the heat that can be removed by the coolant.

In the context of these solutions with undercooling, there is the need to obtain an improvement in terms of reduction of the dimensions and of the number of components as well as in terms of efficiency of the undercooling itself.

KR20120095502A and DE10060114A disclose a heat exchanger and a branched line provided with an expansion valve. A heat exchange medium is cooled in the heat exchanger and includes a part that is expanded through such valve and used as refrigerant into a supercooling region of the heat exchanger.

The object of the invention is to provide a heat exchange assembly for the condensation and the undercooling of a coolant, which allows manufacturers to fulfil the need discussed above in a simple and economic fashion.

According to the invention, there is provided a heat exchange assembly for the condensation and the undercooling of a coolant according to claim 1.

The invention will now be described with reference to the accompanying drawings, which show a non-limiting embodiment thereof, wherein:
- figure 1 is a diagram of a cooling circuit, which is provided with an example of heat exchange assembly for the condensation and the undercooling of a coolant; this example does not fall under the scope of the present invention, but is helpful to understand the present invention;
- figure 2 schematically shows, on a larger scale, the heat exchange assembly of figure 1;
- figure 3 is similar to figure 1 and shows a variant of the heat exchange assembly of figures 1 and 2; and
- figure 4 schematically shows a further variant of the heat exchange assembly of figures 1 and 2, defining a preferred embodiment according to the present invention.

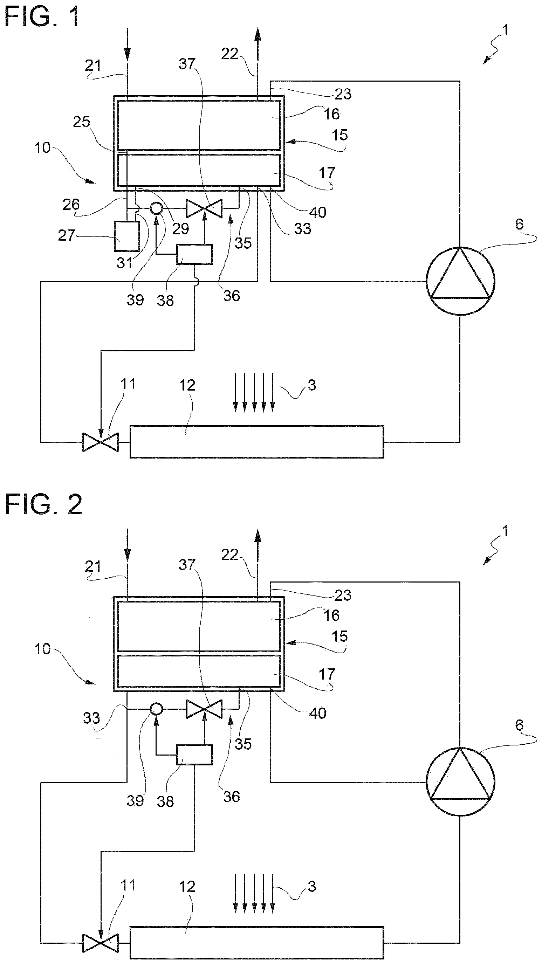

In figure 1, reference number 1 indicates, as a whole, a cooling circuit, which is shown in a schematic manner, to cool a fluid flow 3. In particular, the circuit 1 is part of a vehicle conditioning system, which is not shown herein, which means that the fluid flow 3 is defined by an air flow circulating in a passenger compartment of the vehicle.

The circuit 1 channels a coolant in a loop and comprises a compressor 6, which compresses the coolant while the latter is in the gaseous state. In particular, the compressor 6 is a spiral compressor. The compressed coolant is then condensed and undercooled by a heat exchange assembly 10, which is described in detail hereinafter. Subsequently, the condensed and undercooled coolant flows into an expansion valve 11 and is subject to an isenthalpic process, which decreases the temperature and the pressure of the coolant. The latter, flowing then in an evaporator 12, removes heat from the fluid flow 3. At the outlet of the evaporator 12, the coolant flows back to the compressor 6 in order to repeat the cycle.

The assembly 10 comprises a single heat exchanger 15, which comprises, in turn, two heat exchange sections 16 and 17, one for the condensation of the coolant coming from the compressor 6 and the other one for the undercooling of at least part of the coolant, which has been condensed by the section 16. In other words, as schematically shown in figure 2, the exchanger 15 has a single channel structure 18: a first part of the channel structure 18 defines the section 16, whereas the second part of the channel structure 18 defines the section 17 and is separated from the first part by a separation element 19 inside the channel structure 18. For example, the exchanger 15 is a plate exchanger, namely the channel structure 18 comprises a plurality of parallel plates defining, between one another, a plurality of channels, which are alternated with one another and are separated from one another in a fluidtight manner. In case of a plate exchanger, the separation element 19 is defined by a plate element.

More in detail, the section 16 has two sets of channels indicated by 20a and 20b, where the compressed coolant at the gaseous state and a cooling liquid, for example water, respectively, flow. Therefore, the section 16 defines a water condenser. In particular, the section 16 comprises an inlet 21 and an outlet 22 defined by respective mouths suitable to be connected to a circuit (not shown) where the cooling liquid circulates. Furthermore, the section 16 comprises an inlet 23 defined by a mouth connected, in use, to a delivery port of the compressor 6 to let the coolant into the channels 20a; and an outlet 25 to let the coolant out of the channels 20b. Therefore, it is evident that the cooling liquid, by getting into the inlet 21 at a low relative temperature and by flowing in the channels 20b, can remove heat from the coolant flowing in the channels 20a.

The outlet 25 is connected, by a fitting 26, to a storage tank, commonly known as receiver and indicated by reference number 27. The receiver 27 is known and, therefore, will not be described in detail; it fulfils the function of collecting the condensed coolant (which will flow, downstream, towards the section 17) and of separating it from the gaseous coolant of the channels 20a.

With reference to what is schematically shown in figure 2, again, the section 17 is arranged under the section 16 and has two series of channels 28a and 28b, which are alternated with one another and isolated from the channels 20a and 20b by the separation element 19.

The section 17 comprises an inlet 29 to let condensed coolant, which is going to be undercooled, into the channels 28a. The inlet 29 communicates with an outlet of the receiver 27 by a fitting 31, which means that it permanently communicates with the outlet 25.

The section 17 comprises an outlet 33 defined by a mouth connected, in use, to the expansion valve 11 so as to let out the coolant that has been undercooled in the channels 28a.

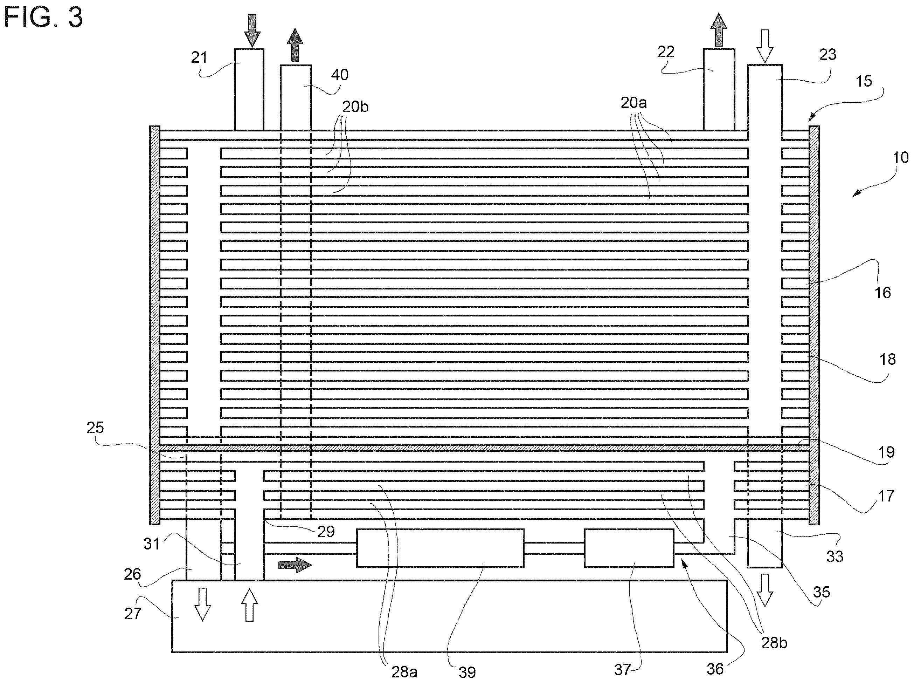

At the same time, the channels 28b have an inlet 35 connected to a branch-off line 36, which draws a part of the coolant that has been condensed by the section 16. In the specific example of figures 1 and 2, the line 36 branches off from the duct 26 and, therefore, draws the condensed coolant from said duct 26. According to a variant which is not shown herein, the line 36 branches off from the duct 31, namely from a point between the receiver 27 and the outlet 25. According to a further variant which is nor shown herein, the line 36 directly branches off from the channels 28a. According to the variant of figure 3, the line 36 branches off from a point of the circuit 1 downstream of the channels 28a, for example from a point in the area of the outlet 33.

According to an aspect of the invention, the line 36 comprises an expansion valve 37. Therefore, the inlet 35 receives a cooling fluid that is defined by drawn coolant, which is then laminated by the valve 37.

In the specific example of figure 1, not falling under the scope of the present invention, the valve 37 is defined by a solenoid valve, which is controlled by an electronic control unit 38 based on the signals emitted by sensors that are not shown herein, so as to adjust the passage cross-section of the valve 37 and, hence, the extent of the expansion of the coolant in the line 36.

The line 36 preferably comprises, furthermore, a closing solenoid valve 39, which is preferably arranged upstream of the valve 37 and is controlled by the control unit 38 in a selective manner so as to activate or deactivate the drawing along the line 36.

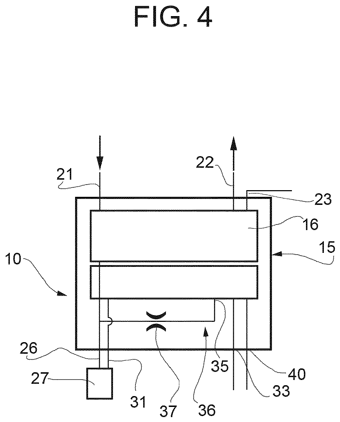

According to the embodiment of the invention in figure 4, the valve 37 is defined by a throttling, namely an opening with smaller dimensions compared to the remaining part of the line 36 and with a fixed passage cross-section, which is defined during the design phase and, if necessary, is adjusted in the manufacturing and/or installation phases. In particular, the solenoid valve 39 is absent, which means that the line 36 is not controlled from the outside, but it is merely subject to an initial setting defined during the design phase. In this case, more preferably, the valve 37 or the entire line 36 are built-in inside the exchanger 15.

On the other hand, in case there is a control by the control unit 38, the valves 37 and/or 39 are outside of the exchanger 15. The receiver 27 is represented in figures 1, 2 and 4 as element arranged outside of the exchanger 15, but there could be variants in which the receiver 27 is absent or built-in inside the exchanger 15 (like in figure 3) .

In use, the part of condensed coolant that is drawn from the line 36 undergoes a temperature decrease thanks to the expansion through the valve 37 and, once it has entered the channels 28b, removes heat from the coolant flowing in the channels 28a, so as to obtain the undercooling thereof.

The cooling fluid defined by the drawn and laminated coolant flows out of the channels 28b of the section 17 through an outlet 40 defined by a mouth, which is connected, in use, to another point of the circuit 1 downstream of the evaporator 12, so as to merge with the remaining part of coolant at the gaseous state. In particular, according to figures 1 and 3, the mouth 40 is connected to the compressor 6.

Owing to the above, it is evident that the undercooling in the section 17 is carried out with a high degree of efficiency, thanks to the fact of using a fraction of the condensed coolant that is laminated through the valve 37. In particular, it is possible to obtain a great decrease in the temperature of the section 17. At the same time, in order to obtain the undercooling, no complicated channels and/or connections are needed, thanks to the fact of using a coolant that is drawn close to, or inside, the exchanger 15.

The simplicity of this solution is also due to the fact that it has a single heat exchanger which accommodates, together, the two sections 16 and 17, without having to provide two separate exchangers to be connected by pipes during the installation.

Therefore, the number of components of the assembly 10 as well as its manufacturing and assembling costs are relatively low, when compared to known solutions.

Finally, owing to the above, it is evident that the assembly 10 described with reference to the accompanying drawings can be subject to changes and variations, which do not go beyond the scope of protection of the invention, as set forth in the appended claims.

In particular, the exchanger 15 could be different from a plate exchanger.

## Claims

1. A heat exchange assembly (10) for the condensation and the undercooling of a coolant, the heat exchange assembly comprising a single heat exchanger (15) comprising a condensation section (16) and an undercooling section (17); the condensation section (16) comprising:
- first channels (20a) having a first inlet (23) and a first outlet (25) for a coolant flow;
- second channels (20b) having a second inlet and a second outlet for a cooling liquid suitable to cause said coolant flow to condense;
said undercooling section (17) comprising:
- third channels (28a) having a third inlet (29) and a third outlet (33) for a condensed coolant flow;
- fourth channels (28b) separate from said second channels (20b) and having a fourth inlet (35) and a fourth outlet (40) for a cooling fluid suitable to undercool the condensed coolant flow;
said third inlet (29) communicating with said first outlet (25) so as to feed at least part of the coolant flowed out of said condensation section (16) into said third channels (28a) ;
wherein the heat exchange assembly (10) further comprises a branch-off line (36), which communicates, on one side, with said first channels (28a) so as to draw a part of coolant which has been condensed by said condensation section (16) and, on the other side, with said fourth inlet (35); said branch-off line (36) comprising an expansion valve (37);
wherein said branch-off line (36) branches off from a point downstream of said first outlet (25);
**characterized in that** said branch-off line (36) branches off from a point upstream of said third inlet (29);
wherein the heat exchange assembly comprises a storage tank arranged between said first outlet (25) and said third inlet (29); said branch-off line (36) branching off from a point between said first outlet (25) and said storage tank (27);
wherein said expansion valve (37) is defined by a throttling having a fixed passage cross-section and built-in inside said heat exchanger (15); and
wherein said branch-off line is built-in inside said heat exchanger (15).

2. The heat exchange assembly according to any one of the preceding claims, **characterized in that** said branch-off line (36) further comprises a shut-off solenoid valve (39), which can be controlled by an electronic control unit (38) in a selective manner so as to activate and deactivate the drawing of the coolant.

## Patentansprüche

1. Wärmetauscheranordnung (10) zur Kondensation und Unterkühlung eines Kühlmittels, wobei die Wärmetauscheranordnung einen einzelnen Wärmetauscher (15) umfasst, umfassend eine Kondensationssektion (16) und eine Unterkühlungssektion (17); wobei die Kondensationssektion (16) umfasst:
- erste Kanäle (20a) mit einem ersten Einlass (23) und einem ersten Auslass (25) für einen Kühlmittelstrom;
- zweite Kanäle (20b) mit einem zweiten Einlass und einem zweiten Auslass für eine Kühlflüssigkeit, die geeignet ist, um zu bewirken, dass das genannte Kühlmittel strömt, um zu kondensieren;
wobei die genannte Unterkühlungssektion (17) umfasst:
- dritte Kanäle (28a) mit einem dritten Einlass (29) und einem dritten Auslass (33) für einen kondensierten Kühlmittelstrom;
- vierte Kanäle (28b) getrennt von den genannten zweiten Kanälen (20b) und mit einem vierten Einlass (35) und einem vierten Auslass (40) für ein Kühlfluid, das geeignet ist, um den kondensierten Kühlmittelstrom zu unterkühlen;
wobei der genannte dritte Einlass (29) mit dem genannten ersten Auslass (25) kommuniziert, um so mindestens einen Teil des Kühlmittels, das aus der genannten Kondensationssektion (16) ausgeströmt ist, in die genannten dritten Kanäle (28a) zuzuführen;
wobei die Wärmetauscheranordnung (10) ferner eine Abzweigungsleitung (36) umfasst, die, auf einer Seite, kommuniziert mit den genannten ersten Kanälen (28a), um so einen Teil des Kühlmittels, das von der genannten Kondensationssektion (16) kondensiert wurde, abzuziehen, und, auf der anderen Seite, mit dem genannten vierten Einlass (35); wobei die genannte Abzweigungsleitung (36) ein Expansionsventil (37) umfasst;
wobei die genannte Abzweigungsleitung (36) von einem Punkt stromabwärts von dem genannten ersten Auslass (25) abzweigt;
**dadurch gekennzeichnet, dass** die genannte Abzweigungsleitung (36) von einem Punkt stromaufwärts von dem genannten dritten Einlass (29) abzweigt;
wobei die Wärmetauscheranordnung einen Speichertank umfasst, der zwischen dem genannten ersten Auslass (25) und dem genannten dritten Einlass (29) angeordnet ist; wobei die genannte Abzweigungsleitung (36) von einem Punkt zwischen dem genannten ersten Auslass (25) und dem genannten Speichertank (27) abzweigt;
wobei das genannte Expansionsventil (37) durch eine Drosselung mit einem festgelegten Durchgangsquerschnitt definiert wird und innerhalb des genannten Wärmetauschers (15) eingebaut ist; und
wobei die genannte Abzweigungsleitung innerhalb des genannten Wärmetauschers (15) eingebaut ist.

2. Wärmetauscheranordnung nach einem der vorhergehenden Ansprüche, **dadurch gekennzeichnet, dass** die genannte Abzweigungsleitung (36) ferner ein Absperrsolenoidventil (39) umfasst, das von einer elektronischen Steuereinheit (38) auf selektive Weise gesteuert werden kann, um so das Abziehen des Kühlmittels zu aktivieren und zu deaktivieren.

## Revendications

1. Ensemble d'échange de chaleur (10) pour la condensation et le sous-refroidissement d'un réfrigérant, l'ensemble d'échange de chaleur comprenant un unique échangeur de chaleur (15) comprenant une section de condensation (16) et une section de sous-refroidissement (17) ; la section de condensation (16) comprenant :
- des premiers canaux (20a) ayant une première entrée (23) et une première sortie (25) pour un écoulement de réfrigérant ;
- des deuxièmes canaux (20b) ayant une deuxième entrée et une deuxième sortie pour un liquide de refroidissement approprié pour amener ledit écoulement de réfrigérant à condenser ;
ladite section de sous-refroidissement (17) comprenant :
- des troisièmes canaux (28a) ayant une troisième entrée (29) et une troisième sortie (33) pour un écoulement de réfrigérant condensé ;
- des quatrièmes canaux (28b) séparés desdits deuxièmes canaux (20b) et ayant une quatrième entrée (35) et une quatrième sortie (40) pour un fluide de refroidissement approprié pour sous-refroidir l'écoulement de réfrigérant condensé ;
ladite troisième entrée (29) communiquant avec ladite première sortie (25) de façon à acheminer au moins une partie du réfrigérant qui s'est écoulée hors de ladite section de condensation (16) dans lesdits troisièmes canaux (28a) ;
dans lequel l'ensemble d'échange de chaleur (10) comprend en outre une ligne de ramification (36), qui communique, sur un côté, avec lesdits premiers canaux (28a) de façon à entraîner une partie de réfrigérant qui a été condensée par ladite section de condensation (16) et, sur l'autre côté, avec ladite quatrième entrée (35) ; ladite ligne de ramification (36) comprenant un détendeur (37) ;
dans lequel ladite ligne de ramification (36) se ramifie à partir d'un point en aval de ladite première sortie (25) ;
**caractérisé en ce que** ladite ligne de ramification (36) se ramifie à partir d'un point en amont de ladite troisième entrée (29) ;
dans lequel l'ensemble d'échange de chaleur comprend un réservoir de stockage agencé entre ladite première sortie (25) et ladite troisième entrée (29) ; ladite ligne de ramification (36) se ramifie à partir d'un point entre ladite première sortie (25) et ledit réservoir de stockage (27) ;
dans lequel ledit détendeur (37) est défini par un étranglement ayant une section transversale de passage fixe et intégré dans ledit échangeur de chaleur (15) ; et
dans lequel ladite ligne de ramification est intégrée dans ledit échangeur de chaleur (15).

2. Ensemble d'échange de chaleur selon l'une quelconque des revendications précédentes, **caractérisé en ce que** ladite ligne de ramification (36) comprend en outre une électrovanne d'arrêt (39), qui peut être commandée par un bloc de commande électronique (38) d'une manière sélective de façon à déclencher et couper l'entraînement du réfrigérant.
